# EUROPÄISCHE PATENTSCHRIFT

(11) **EP 1 404 542 B1**
(45) Veröffentlichungstag und Bekanntmachung des Hinweises auf die Patenterteilung: **09.08.2006**
(21) Anmeldenummer: 02767153.6
(22) Anmeldetag: 18.06.2002
(51) Int. Cl.: B60N 2/02, B64D 11/00

(54) **Passagiersitze und deren Bedienvorrichtung**
Passenger seat control system
Sièges passager et leurs modules de commande

(30) Priorität: 06.07.2001 DE 10132323
(43) Veröffentlichungstag der Anmeldung: 07.04.2004
(73) Patentinhaber: Deutsche Lufthansa AG, 50679 Köln (DE)
(72) Erfinder: VOLTZ, Steffen, 64380 Rossdorf (DE); VOIGT, Joachim, 61130 Nidderau (DE)
(74) Vertreter: Lenzing, Andreas
(86) Internationale Anmeldenummer: PCT/EP2002/006718
(87) Internationale Veröffentlichungsnummer: WO 2003/004305

(56) Entgegenhaltungen:
- FR-A- 2 696 384
- FR-A- 2 737 686
- GB-A- 2 334 673
- US-A- 4 204 255

## Beschreibung

Die vorliegende Erfindung betrifft ein System mit mehreren funktionsgleichen Passagiersitzen in mehreren Flugzeugen.

Bei den bekannten Sitzen für Flugzeuge, Züge und dergleichen werden Bedieneinheiten für sogenannte Infotainment-Funktionen vorgesehen, die im einfachsten Falle Lautstärke und Programmwahl für Audio-Übertragung enthalten. Bei komfortableren Einheiten enthält insbesondere in Flugzeugen die Bedieneinheit auch Steuerungen für TV, Video, E-Mail, Internetfunktionen und gegebenenfalls Telefon. Diese Bedieneinheiten sind räumlich und funktional getrennt von den Bedieneinheiten für Sitzfunktionen, die die Sitzverstellung und gegebenenfalls weitere Sitzfunktionen umfassen.

Bei der beschriebenen separaten Anordnung der Bedienelemente für Infotainment und Sitzbedienung ist es zum einen erforderlich, dies separat im Sitz einzubauen und zu verkabeln, was erhöhten Montageaufwand bedeutet. Zum anderen sind die Passagiere mit zwei verschiedenen Bedieneinheiten konfrontiert, die gegebenenfalls an unterschiedlichen Orten platziert sind und unterschiedliche Handhabung erfordern. Dies ist in der Praxis unerwünscht.

Es ist Aufgabe der vorliegenden Erfindung, die Bedienung der Infotainment-Funktionen und der Sitzfunktionen zu vereinfachen Dies wird durch ein System mit den Merkmalen des Anspruchs 1 gelöst.

Weil die Bedieneinheiten in einem gemeinsamen Gehäuse zusammengefasst sind, sind sie am gleichen Ort, so dass sie in einem Montagevorgang gleichzeitig in ein Gehäuse eingebaut werden können und außerdem für den Passagier einheitlich vorgefunden werden. Dabei kann auch die Funktionalität optisch und elektromechanisch angeglichen werden.

Vorzugsweise befinden sich die beiden Bedieneinheiten in einem Gehäuse einer kabelgebundenen oder drahtlosen Fernbedienung des Sitzes. Im Falle der drahtlosen Fernbedienung kann diese über ein Befestigungsmittel, das rein mechanische Funktionen erfüllt, mit dem Sitz unverlierbar verbunden sein.

Die Bedienvorrichtung kann weiter mit einer Identifizierungseinheit verbunden sein, die den Passagier identifiziert und gegebenenfalls gespeicherte Werte für die bevorzugte Sitzeinstellung oder die bevorzugte Infotainment-Einstellung abruft und übernimmt. Die Identifizierungseinheit ist dabei im einfachsten Falle ein Kartenleser, beispielsweise für Chip- oder Magnetkarten. Die Daten für die bevorzugten Einstellungen können dann auf der Karte gespeichert werden und von einem funktionsgleichen Sitz in einem anderen Verkehrsmittel bei einer anderen Reise wieder abgerufen werden.

Die Identifizierungseinheit kann auch als Kreditkartenleser oder Kartenleser für Mitgliedskarten von Vielfliegerprogrammen ausgelegt werden. Über diese Karten können dann zugleich gebührenpflichtige Angebote wie Pay-TV, Internet oder Telephonie abgerechnet werden.

Im folgenden wir ein Ausführungsbeispiel der vorliegenden Erfindung anhand der Zeichnungen beschrieben.

Es zeigen:
- Figur 1:: eine Bedienvorrichtung für einen Flugzeugsitz in der Ausführung als kabelgebundene Fernbedienung in einer Draufsicht;
- Figur 2:: die Bedienvorrichtung gemäß Figur 1 in einer Seitenansicht; sowie
- Figur 3:: die Bedienvorrichtung gemäß Figur 1 in einer Rückansicht.

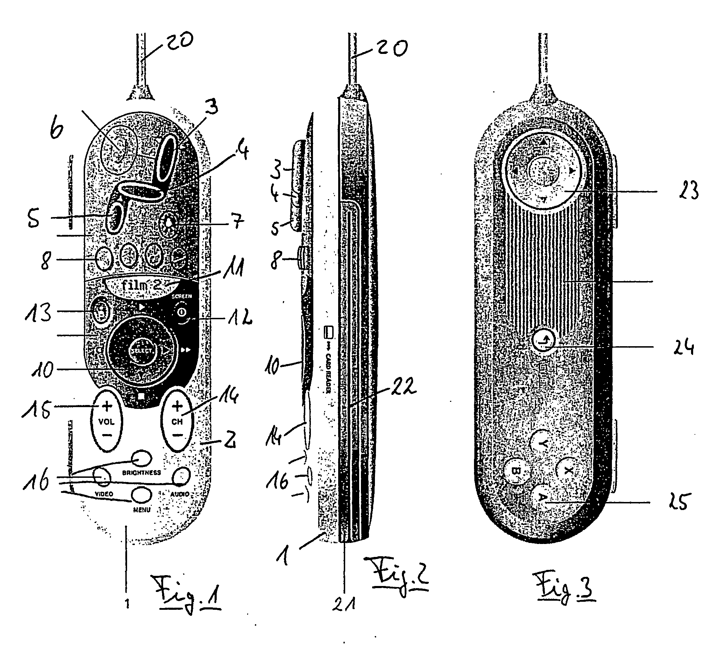

Die Figur 1 zeigt eine kabelgebundene Fernbedienung für einen Flugzeugsitz in einer Draufsicht. Ein Fernbedienungsgehäuse 1 umfasst in einem handhabbaren Gehäuse 2 in dem in Figur 1 oberen Teil ein Schaltelement 3 für Funktionen der Sitzlehne, ein Schaltelement 4 für Funktionen der Sitzfläche und ein Schaltelement 5 für Funktionen der Bein- oder Fußstütze. Ein weiteres Bedienelement 6 ist für eine Lendenwirbelstütze in der Rückenlehne vorgesehen.

Weiter sind für die Funktionen des Sitzes ein Lichtschalter 7 und insgesamt vier Schalter für vorgewählte Positionen (Essen, Lesen, Ruhen, Liegen) bei 8 vorgesehen.

Unterhalb der Bedienelemente für die Sitzfunktionen ist ein Abschnitt mit Bedieneinheiten für Videofunktionen (Vorspulen, Rückspulen, Start und Stop) bei 10 vorgesehen. Ein Display 11 zeigt die gewählte Audio- oder Videoquelle oder sonstige Funktionen an. Mit einem Ein- und Ausschalter bei 12 kann der im Sichtbereich des Passagiers liegende Bildschirm ein- und ausgeschaltet werden. Mit dem Schalter 13 kann Service angefordert werden.

Wiederum unterhalb der beschriebenen Bedienelemente sind ein Schalter 14 für die Kanalwahl, ein Lautstärkeregler 15 sowie verschiedene Umschalter 16 für Video, Audio, Bildschirmhelligkeit und ein Menü vorgesehen. Alle insoweit beschriebenen Funktionen sind in die Bedieneinheit 1 integriert. Sie sind daher bei der Montage des Passagiersitzes als ein einziges komplett vorgefertigtes Zulieferteil zu beziehen und können über ein Verbindungskabel 20 mit dem Sitz verbunden werden. Die Montage dieser Bedieneinheit ist folglich besonders einfach, zeitsparend und somit auch kostensparend.

Für den Benutzer hat diese Bedienvorrichtung den Vorteil, dass alle für den Komfort während einer Reise erforderlichen Funktionen am selben Ort anzufinden sind. Er muss sich nicht auf die Suche nach den unterschiedlichen Bedieneinheiten für die unterschiedlichen Komfortfunktionen begeben und muss sich insbesondere bei der dargestellten Ausführungsform einer kabelgebundenen Fernbedienung nicht den verschiedenen Bedieneinheiten zuwenden.

In der Figur 2 ist die Bedienvorrichtung gemäß Figur 1 in einer Seitenansicht von rechts dargestellt. Seitlich in dem Gehäuse der Bedienvorrichtung 1 ist ein Kartenleser 21 eingebaut, der einen seitlich offenen Schlitz 22 zum Einführen einer Magnetkarte aufweist.

Mit dieser Magnetkarte können die persönlichen Daten des Passagiers abgefragt werden. Er kann individuell vorgenommene Sitzeinstellungen, die beispielsweise den Tasten 8 zugeordnet sein können, auf der Karte speichern. Später können dann in einem ähnlichen oder baugleichen Sitz diese bevorzugten Sitzeinstellungen wieder abgerufen werden. Außerdem können bevorzugte Einstellungen der Audio- und Videofunktionen gespeichert und abgerufen werden und schließlich auch Abrechnungsdaten übermittelt werden, die es dem Passagier ermöglichen, kostenpflichtige Angebote des Infotainments wie z. B. Pay-TV, Computer- oder Glücksspiele sowie Internetfunktionen und gegebenenfalls Telephonie zu nutzen, ohne diese in einem separaten, gegebenenfalls als lästig empfundenen Vorgang abrechnen zu müssen.

Es ist weiter möglich, dass auf der Rückseite der Bedienvorrichtung Funktionselemente für eine Bedienung von Internet-, e-mail- oder sonstigen Funktionen vorgesehen ist, die eine Benutzereingabe erfordern. Entsprechende auf der Rückseite angeordnete Bedienelemente sind in der Figur 3 mit den Bezugsziffern 23, 24 und 25 gekennzeichnet.

Sofern die vorliegende Erfindung hier anhand einer Bedienvorrichtung veranschaulicht wurde, die in Form einer kabelgebundenen Fernbedienung ausgeführt ist, können derartige Bedienvorrichtungen auch drahtlos ausgeführt werden. Insbesondere ist es auch möglich, eine drahtlos übertragende Bedienvorrichtung über ein Zugmittel wie beispielsweise ein Seil unverlierbar mit dem jeweiligen Sitz zu verbinden, so dass die mechanisch möglicherweise anfällige Kabelverbindung entfällt.

## Patentansprüche

1. System mit mehreren funktionsgleichen Passagiersitzen in mehreren Flugzeugen, wobei jeder der Sitze eine Bedienvorrichtung (1) mit einem Kartenleser (21) umfasst, wobei das System eine Karte, beispielsweise eine Chip- oder Magnetkarte, umfasst, wobei eine Sitzverstellung der Passagiersitze mittels der Bedienvorrichtung einstellbar ist, wobei Daten für die bevorzugten Einstellungen auf der Karte gespeichert werden können und von einem funktionsgleichen Sitz in einem anderen Flugzeug bei einer anderen Reise wieder abgerufen werden können, wobei die Bedienvorrichtung wenigstens zwei Funktionsbereiche beinhaltet, von denen einer die Sitzverstellung beinhaltet, wobei Bedieneinheiten für die wenigstens zwei Funktionsbereich in einem gemeinsamen Gehäuse zusammengefasst sind, wobei einer der Funktionsbereiche eine Audio/Video Funktion ist.

2. System nach Anspruch 1, **dadurch gekennzeichnet, dass** sich die beiden Bedieneinheiten in einem Gehäuse (2) einer kabelgebundenen oder drahtlosen Fernbedienung des Sitzes befinden,
wobei die Bedienvorrichtung (1) mit einer Identifikationsvorrichtung (21) versehen ist, die geeignet ist, den Passagier mittelbar oder unmittelbar zu identifizieren und gegebenenfalls gespeicherte Werte für wenigstens eine bevorzugte Sitzeinstellung oder bevorzugte Infotainment-Einstellungen abzurufen und zu übernehmen,
wobei die Identifikationsvorrichtung (21) in der Bedienvorrichtung (1) eingebaut ist.

3. System nach Anspruch 2, **dadurch gekennzeichnet, daß** das Gehäuse (2) der drahtlosen Fernbedienung über ein Befestigungsmittel, das rein mechanische Funktionen erfüllt, mit dem Sitz unverlierbar verbunden ist.

4. System nach einem der vorhergehenden Ansprüche, **dadurch gekennzeichnet, daß** die Identifizierungseinheit als Kreditkartenleser oder Kartenleser für Mitgliedskarten von Vielfliegerprogrammen ausgerüstet ist.

5. System nach Anspruch 4, **dadurch gekennzeichnet, daß** über diese Karten gebührenpflichtige Angebote wie Pay-TV, Internet oder Telefonie abgerechnet werden können.

6. System nach einem der Ansprüche 1 bis 6, **dadurch gekennzeichnet, daß** die Bedienvorrichtung eine Rückseite aufweist, wobei weitere Funktionselemente auf der Rückseite vorgesehen sind.

7. System nach Anspruch 6, **dadurch gekennzeichnet, daß** mittels der weiteren Funktionselemente Internetfunktionen und/oder e-mail-Funktionen bedienbar sind.

8. System nach einem der Ansprüche 1 bis 8, **dadurch gekennzeichnet, daß** die Bedienvorrichtung in Form einer kabellosen Fernbedienung ausgebildet ist, wobei die Fernbedienung mittels eines Zugmittels, insbesondere eines Seils, unverlierbar mit dem Passagiersitz verbunden ist.

## Claims

1. System with a plurality of passenger seats of identical function in a plurality of aircrafts,
wherein each of the seats comprises an operating device (1) with a card reader (21),
wherein the system comprises a card, for example a chip card or magnetic card,
wherein seat adjustment of the passenger seats can be set by means of the operating device,
wherein data for the preferred settings can be stored on the card and can be retrieved by a seat with equal function in a different aircraft on a different journey,
wherein the operating device contains at least two functional areas, one of which includes the seat adjustment,
wherein operating units for the at least two functional areas are combined in a common housing,
wherein one of the functional areas is an audio/video function.

2. System according to claim 1, **characterised in that** the two operating units are located in a housing (2) of a cable-bound or wireless remote control of the seat,
wherein the operating device (1) is provided with an identification device (21) which is suitable for identifying the passenger indirectly or directly and if applicable for retrieving and taking over stored values for at least one preferred seat setting or preferred infotainment settings,
wherein the identification device (21) is built into the operating device (1).

3. System according to claim 2, **characterised in that** the housing (2) of the wireless remote control is captively connected to the seat via a fastening means which fulfils purely mechanical functions.

4. System according to one of the preceding claims, **characterised in that** the identification unit is equipped as a credit card reader or card reader for membership cards of frequent flyer programmes.

5. System according to claim 4, **characterised in that** chargeable provisions, such as pay TV, internet or telephony, can be billed via said cards.

6. System according to one of claims 1 to 5, **characterised in that** the operating device has a reverse side, further functional elements being provided on the reverse side.

7. System according to claim 6, **characterised in that** internet functions and/or email functions are operable by means of the further functional elements.

8. System according to one of claims 1 to 7, **characterised in that** the operating device is designed in the form of a cable-less remote control, wherein the remote control is captively connected to the passenger seat by a pull means, in particular a cable.

## Revendications

1. Système avec plusieurs sièges passager fonctionnellement identiques dans plusieurs avions,
chacun des sièges comprenant un dispositif de commande (1) avec un lecteur de cartes (21),
le système comprenant une carte, par exemple une carte à puce ou une carte magnétique,
un réglage de siège des sièges passager étant réglable au moyen du dispositif de commande,
des données pouvant être enregistrées sur la carte pour les réglages préférés et pouvant être rappelés par un siège fonctionnellement identique dans un autre avion lors d'un autre voyage,
le dispositif de commande comprenant au moins deux zones fonctionnelles dont l'une contient le réglage de siège,
des unités de commande pour les zones fonctionnelles au nombre d'au moins deux étant regroupées dans un boîtier commun,
l'une des zones fonctionnelles étant une fonction audio/vidéo.

2. Système selon la revendication 1, **caractérisé en ce que** les deux unités de commande se trouvent dans un boîtier (2) d'une télécommande avec fil ou sans fil du siège,
le dispositif de commande (1) étant muni d'un dispositif d'identification (21) qui convient pour identifier directement ou indirectement le passager et pour appeler et reprendre éventuellement des valeurs enregistrées pour au moins un réglage préféré du siège ou pour des réglages préférés d'info-loisirs,
le dispositif d'identification (21) étant inséré dans le dispositif de commande (1).

3. Système selon la revendication 2, **caractérisé en ce que** le boîtier (2) de la télécommande sans fil est relié au siège d'une manière inamovible par l'intermédiaire d'un moyen de fixation qui ne remplit que des fonctions purement mécaniques.

4. Système selon l'une des revendications précédentes, **caractérisé en ce que** l'unité d'identification, en tant que lecteur de cartes de crédit ou lecteur de cartes de membre, est équipée de programmes pour les voyageurs fréquents.

5. Système selon la revendication 4, **caractérisé en ce que**, par l'intermédiaire de ces cartes, des offres payantes comme la télévision payante, Internet ou la téléphonie peuvent être facturées.

6. Système selon l'une des revendications 1 à 5, **caractérisé en ce que** le dispositif de commande présente une face arrière, d'autres éléments fonctionnels étant prévus sur la face arrière.

7. Système selon la revendication 6, **caractérisé en ce qu'**au moyen des autres éléments fonctionnels, des fonctions Internet et/ou des fonctions d'e-mail peuvent être utilisées.

8. Système selon l'une des revendications 1 à 7, **caractérisé en ce que** le dispositif de commande est réalisé sous la forme d'une télécommande sans fil, la télécommande étant reliée de manière inamovible au siège de passager par un moyen de traction, en particulier un cordon.
